# EUROPÄISCHE PATENTSCHRIFT

(11) **EP 2 649 337 B1**
(45) Veröffentlichungstag und Bekanntmachung des Hinweises auf die Patenterteilung: **20.05.2015**
(21) Anmeldenummer: 11810562.6
(22) Anmeldetag: 11.11.2011
(51) Int. Cl.: F16B 17/00

(54) **REIBUNGSKUPPLUNG UND VERFAHREN ZUR HERSTELLUNG EINER REIBUNGSKUPPLUNG**
FRICTION CLUTCH AND METHOD OF FABRICATION OF A CLUTCH
EMBRAYAGE À FRICTION ET MÉTHODE DE FABRICATION D'UN EMBRAYAGE À FRICTION.

(30) Priorität: 09.12.2010 DE 102010053932
(43) Veröffentlichungstag der Anmeldung: 16.10.2013
(73) Patentinhaber: Schaeffler Technologies AG & Co. KG, 91074 Herzogenaurach (DE)
(72) Erfinder: KREBS, Florian, 77815 Bühl (DE); DAIKELER, René, 77830 Bühlertal (DE); HELLGOTH, Rene, 77815 Bühl (DE); MÜHLHAUSEN, Jens, 77815 Bühl (DE)
(86) Internationale Anmeldenummer: PCT/DE2011/001970
(87) Internationale Veröffentlichungsnummer: WO 2012/075986

(56) Entgegenhaltungen:
- EP-A2- 1 384 909
- EP-A2- 1 391 623
- DE-A1- 3 347 912
- DE-A1- 19 928 648
- FR-A1- 2 712 361
- GB-A- 2 243 884
- GB-A- 2 291 144
- US-A- 5 293 978

## Beschreibung

Die Erfindung betrifft eine Reibungskupplung, insbesondere Doppelkupplung, sowie ein Verfahren zur Herstellung einer Reibungskupplung, wobei mit Hilfe der Reibungskupplung in einem Kraftfahrzeug eine motorseitige Eingangswelle mit mindestens einer Ausgangswelle gekuppelt werden kann, um ein Drehmoment zu übertragen.

Aus DE 43 09 570 A1 ist eine Reibungskupplung bekannt, bei der eine Kupplungseinrichtung eine Anpressplatte auf eine Gegenplatte zu bewegen kann, um zur Drehmomentüberträgung zwischen der Anpressplatte und der Gegenplatte eine mit einer getriebeseitigen Ausgangswelle verbundene Kupplungsscheibe zu verpressen. Die Gegenplatte ist mit einem mit einer motorseitigen Eingangswelle verbundenen Kupplungstopf über radial verlaufende Schrauben verschraubt.

Aus der GB2243884 A1 ist eine Reibungskupplung bekannt, bei der die Gegenplatte durch die Schwungscheibe gebildet wird. Die Schwungscheibe ist mit über radial verlaufende Verbindungselemente mit dem Kupplungstopf der Reibungskupplung verbunden. Bei den Verbindungselementen kann es sich um Sacklochniete oder um Materialverformungen des Kupplungstopfes in entsprechende Sacklöcher der Schwungscheibe handeln. Die Materialverformungen müssen durch Stempel geformt werden, die exakt auf die Position und Größe der Sacklöcher abgestimmt sind.

Es besteht ein ständiges Bedürfnis Reibungskupplungen kostengünstig herzustellen.

Es ist die Aufgabe der Erfindung, eine Reibungskupplung zu schaffen, die kostengünstig herstellbar ist.

Die Lösung der Aufgabe erfolgt erfindungsgemäß durch eine Reibungskupplung mit den Merkmalen der Ansprüche 1 und 2.

Die erfindungsgemäße Reibungskupplung, insbesondere Doppelkupplung, zum Kuppeln einer motorseitigen Eingangswelle mit mindestens einer getriebeseitigen Ausgangswelle, weist eine Gegenplatte zur reibschlüssigen Übertragung eines Drehmoments und eine Kupplungseinrichtung auf, die eine relativ zu der Gegenplatte axial bewegbare Anpressplatte zum Kuppeln einer mit der Ausgangswelle verbindbaren Kupplungsscheibe aufweist. Zusätzlich ist ein Kupplungstopf zur Aufnahme der Kupplungseinrichtung vorgesehen, wobei die Gegenplatte in den Kupplungstopf eingesetzt ist. Die Gegenplatte ist über ein im Wesentlichen radial verlaufendes Verbindungsmittel mit dem Kupplungstopf verbunden. Erfindungsgemäß ist das Verbindungsmittel durch eine plastische Verformung des Verbindungsmittels selbst und/oder der zu verbindenden Bauteile der Reibungskupplung in einer in der Gegenplatte ausgebildeten Verbindungsöffnung eingepresst.

Durch das Verbindungsmittel ist auch unter Fliehkrafteinfluss eine sichere Übertragung von axialen Kräften, radialen Kräften und/oder Kräften in Umfangsrichtung möglich. Durch das Einpressen des Verbindungsmittels in die Verbindungsöffnung der Gegenplatte wird eine sichere reibschlüssige Verbindung geschaffen, die auch unter Fliehkrafteinfluss beibehalten wird. Eine formschlüssige Verbindung beispielsweise durch eine Schraubenverbindung ist nicht erforderlich, so dass die entsprechenden Fertigungsschritte, in der Gegenplatte ein Innengewinde vorzusehen, eingespart werden können. Zusätzlich erfolgt das Einpressen des Verbindungsmittels durch eine plastische Verformung, so dass besonders geringe Toleranzanforderungen an die Verbindung der Gegenplatte mit dem Kupplungstopf gestellt werden können. Im Vergleich zu einer Passstift-Verbindung sind deutlich geringere Genauigkeiten ausreichend, um eine ausreichende Pressung zwischen dem Verbindungsmittel und der Verbindungsöffnung herstellen zu können. Durch die plastische Verformung können im Gegensatz zu einer rein elastischen Verformung, beispielsweise bei einer Presspassung mit Hilfe eines Verbindungsstifts, auch größere Toleranzen automatisch ausgeglichen werden. Durch das Einpressen des Verbindungsmittels in die Verbindungsöffnung der Gegenplatte durch eine plastische Verformung können besonders geringe Toleranzanforderungen an die Verbindung der Gegenplatte mit dem Kupplungstopf gestellt werden, so dass die Reibungskupplung kostengünstig hergestellt werden kann. Durch die plastische Verformung ergibt sich eine automatisch vergrößerte Anpressfläche zwischen dem Verbindungsmittel und der Verbindungsöffnung, die einen entsprechend hohen Reibschluss ermöglicht. Insbesondere kann der Spannungsverlauf in Umfangsrichtung und/oder in axialer Richtung zwischen dem Verbindungsmittel und der Verbindungsöffnung vergleichmäßigt werden. Das Verbindungsmittel ist vorzugsweise vollständig radial innerhalb zu einer nach radial außen weisenden Mantelfläche des Kupplungstopfs angeordnet. Vom Kupplungstopf nach radial außen abstehende Teile des Verbindungsmittels können vermieden werden, so dass sich der Bauraum der Reibungskupplung in radialer Richtung nicht erhöht. Besonders bevorzugt sind zur Verbindung der Gegenplatte mit dem Kupplungstopf ausschließlich radial ausgerichtete Verbindungsmittel vorgesehen, so dass mit der Gegenplatte keine axial ausgerichteten Verbindungsmittel direkt in Kontakt stehen.

Durch die radial verlaufende Verbindungsöffnung kann sichergestellt werden, dass das Verbindungsmittel nicht axial, sondern radial ausgerichtet mit der Gegenplatte verbunden wird. Dadurch ist es möglich, den anderenfalls in axialer Richtung vorzusehenden Bauraum einzusparen, so dass eine Reibungskupplung mit einer derartigen Gegenplatte bauraumspärender ausgestaltet werden kann. Insbesondere ist es möglich, den gewonnenen Bauraum zu nutzen, um die Reibflächen zwischen der Gegenplatte und der Kupplungsscheibe sowie der Kupplungsscheibe und der Anpressplatte nach radial außen zu verlängern. Dadurch kann bei begrenztem Bauraum ein größeres Drehmoment übertragen werden. Ferner ist es möglich, durch eine Versetzung der Reibbeläge auf einen größeren Nenndurchmesser größere mittlere Reibradien zu erreichen, die ein Absenken der erforderlichen Reibungskraft und/oder eine erhöhte Momentenkapazität ermöglichen. Es ist auch möglich, bei einer Verlagerung der Reibbeläge auf einen größeren Nenndurchmesser die Reibflächen im Wesentlichen konstant zu halten, wodurch die radiale Erstreckung der Reibbeläge reduziert werden kann. Dadurch wird. radial innerhalb der Reibbeläge zusätzlicher freier Bauraum geschaffen, ohne die Kupplungseigenschaften nachteilig zu beeinflussen. Dadurch ist es beispielsweise möglich, radial innerhalb der Reibbeläge die Kupplungsscheibe mit einem Kupplungsscheibendampfer auszustatten. Insbesondere ist es möglich, die Reibflächen derart zu dimensionieren, dass es möglich ist, die Kupplungseinrichtung als trockene direkt betätigte Kupplungen auszugestalten. Insbesondere ist es nicht erforderlich, zum Betätigen der Kupplungseinrichtung die Anpressplatte über eine Hebelfeder mit einer Betätigungseinrichtung zu verbinden. Die durch eine Hebelfeder oder ähnliche Hebelelemente ermöglichte Übersetzung ist nicht mehr erforderlich, um eine ausreichende Anpresskraft zur Übertragung eines ausreichenden Drehmoments bereitzustellen. Dies ermöglicht es, Bauelemente, die eine Hebelfeder lagern, einzusparen, so dass der Aufbau der Reibungskupplung deutlich vereinfacht werden kann und kostengünstiger herzustellen ist.

Beispielsweise kann die Gegenplatte durch eine mit der motorseitigen Eingangswelle verbundene Schwungscheibe ausgebildet sein. Die Kupplungsscheibe kann insbesondere an voneinander wegweisenden axialen Stirnflächen jeweils einen Reibbelag aufweisen, der mit einem gegebenenfalls vorgesehenen Reibbelag der zugehörigen Gegenplatte und/oder Anpressplatte reibschlüssig in Kontakt kommen kann, um die jeweilige Kupplungseinrichtung zu schließen. Die Kupplungsscheibe kann über eine Verzahnung mit der jeweiligen Ausgangswelle drehfest, aber axial beweglich verbunden sein.

In der Verbindungsöffnung ist in einer bevorzugten Ausführungsform als Verbindungsmittel ein konturierter Bolzen, insbesondere eine Rändelniet, eingepresst, wobei der konturierte Bolzen vor dem Einpressen eine Querschnittsfläche aufweist, die im Vergleich zur Querschnittsfläche der Verbindungsöffnung über die Querschnittsfläche der Verbindungsöffnung seitlich hinausgehende Erhebungen aufweist, wobei die Erhebungen im eingepressten Zustand plastisch verformt sind. Vor dem Einpressen des Verbindungsmittels in die Verbindungsöffnung weist die Querschnittsfläche des Verbindungsmittels Erhebungen auf, die von der auf die Querschnittsfläche des Verbindungsmittels projizierten Querschnittsfläche der Verbindungsöffnung nicht abgedeckt werden können. Beispielsweise ist die Verbindungsöffnung als Bohrung mit einem kreisförmigen Querschnitt ausgestaltet, wobei der konturierte Bolzen eine von der Kreisform abweichende Querschnittsfläche aufweist. Die Querschnittsfläche des Verbindungsmittels kann beispielsweise polygonförmig, elliptisch und/oder vieleckig ausgestaltet sein und/oder mehrere abstehende gerundete und/oder eckige Nocken aufweisen. Insbesondere weist der konturierte Bolzen mehrere längs und/oder quer und/oder angeschrägt nach rechts und/oder links verlaufende Rillen beziehungsweise Vertiefungen auf, zwischen denen abstehende plastisch verformbare Erhebungen ausgebildet sein können. Besonders bevorzugt ist der konturierte Bolzen gerändelt, wobei der konturierte Bolzen Linksrändel, Rechtsrändel, Links-Rechtsrändel, Kreuzrändel, achsparallele Rändel oder Rändel in Umfangsrichtung aufweisen kann. Die einzelnen Rändel sind insbesondere zueinander parallel, können aber auch beispielsweise schraubenförmig ausgestaltet sein.

Zwischen den Erhebungen Vertiefungen sind zur Aufnahme des plastisch verformten Materials der Erhebungen ausgebildet, wobei die Vertiefungen eine nach radial innen weisende gerundete Talsohle aufweisen, wobei die Talsohle insbesondere durch Walzen, Rollen und/oder Prägen herstellbar ist. Durch die gerundete Talsohle der zwischen den Erhebungen ausgebildeten Vertiefungen werden Kerbwirkungen deutlich reduziert. Insbesondere kann die Talsohle durch spanloses Umformen, beispielsweise Walzen, Rollen und/oder Prägen, kostengünstig hergestellt werden. Dadurch lassen sich die zwischen den Vertiefungen ausgebildeten Erhebungen kostengünstig herstellen, wobei die Erhebungen bei der plastischen Verformung des Verbindungsmittels teilweise in die Vertiefungen hinein ausweichen können, um einen passgenauen Presssitz ausbilden zu können.

In einer bevorzugten Ausführungsform ist das Verbindungsmittel durch eine plastische Verformung des Kupplungstopfs ausgebildet. Das Verbindungsmittel kann dadurch einstückig mit dem Kupplungstopf ausgebildet sein, so dass ein separates Verbindungsmittel eingespart werden kann. Insbesondere ist das Verbindungsmittel vor der plastischen Verformung ein in den Formverlauf des Kupplungstopfs integrierter Teil des Kupplungstopfs. Das Verbindungsmittel kann vorzugsweise erst durch eine plastische Verformung des Kupplungstopfs ausgebildet werden. Beispielsweise ist die Gegenplatte aus Gusseisen hergestellt, während der Kupplungstopf auf einem Stahl, insbesondere gewalztem und/oder tiefgezogenem Blech hergestellt sein kann. Dadurch kann die Gegenplatte als Matrize zum plastischen Verformen eines Teils des Kupplungstopfs in die Verbindungsöffnung hinein dienen. Das Verbindungsmittel kann dadurch kostengünstig als Nietwarze aus dem Material des Kupplungstopfs ausgeformt werden. Besonders bevorzugt ist die Verbindungsöffnung angesenkt und/oder kegelförmig angebohrt, um bei der plastischen Verformung des Kupplungstopfs einen Materialfluss von dem Kupplungstopf in die Verbindungsöffnung hinein zu erleichtern.

Der Kupplungstopf weist gegenüberliegend zur Verbindungsöffnung eine nach radial außen weisende durch ein Presswerkzeug herstellbare plastisch verformte Einpressvertiefung auf. Die plastische Verformung des Kupplungstopfs zur Ausbildung des insbesondere als Nietwarze ausgebildeten Verbindungsmittels kann beispielsweise durch Einpressen eines Stempels in das Material des Kupplungstopfs erfolgen, wobei das Material des Kupplungstopfs durch die mit Hilfe des Stempels erreichten plastischen Verformung in die Verbindungsöffnung der Gegenplatte ausweichen kann. Dies führt durch die plastische Verformung des Kupplungstopfs mit Hilfe des Stempels zu einer zusätzlichen Verfestigung des Kupplungstopfs im Bereich der Kontaktfläche zwischen der Gegenplatte und dem Kupplungstopf (Kaltverfestigung). Ein Aufweiten des Kupplungstopfs im Bereich der Kontaktfläche zwischen der Gegenplatte und dem Kupplungstopf durch Fliehkrafteinflüsse wird dadurch reduziert.

Vorzugsweise weist die Einpressvertiefung an der von der Verbindungsöffnung wegweisenden Seite eine größere Querschnittsfläche als die Querschnittsfläche der Verbindungsöffnung auf, wobei insbesondere das Übermaß der Erstreckung der Einpressvertiefung in axialer Richtung größer als in Umfangsrichtung ausgestaltet ist. Der Stempel, durch den die Einpressvertiefung ausgebildet werden kann, kann eine größere Querschnittsfläche aufweisen als die Querschnittsfläche der Verbindungsöffnung. Insbesondere ist die Differenz der Erstreckung der Querschnittsfläche der Einpressvertiefung und der Querschnittsfläche der Verbindungsöffnung (Übermaß) in axialer Richtung besonders groß, so dass ein axialer Versatz der Gegenplatte zum Kupplungstopf von dem Stempel automatisch ausgeglichen werden kann. Die axiale Positionierung der Gegenplatte in dem Kupplungstopf kann dadurch mit einer geringen Genauigkeit erfolgen, wodurch die Herstellungskosten weiter gesenkt werden können.

Besonders bevorzugt weist die Einpressvertiefung an der zu der Verbindungsöffnung weisenden Seite eine kleinere Querschnittsfläche als die Querschnittsfläche der Verbindungsöffnung auf. Insbesondere ist die Einpressvertiefung durch ein Presswerkzeug mit im Längsschnitt kegelstumpfförmiger Spitze herstellbar. Beispielsweise kann ein kegelstumpfförmiger Stempel verwendet werden, der durch seine stirnseitige Spitze, die eine kleinere Querschnittsfläche als die Querschnittsfläche der Verbindungsöffnung aufweisen kann, das Material des Kupplungstopfs besonders weit in die Verbindungsöffnung hinein plastisch verformen kann. Insbesondere kann ein entsprechend kleiner Stempel verwendet werden, so dass geringere Verformungskräfte für die plastische Verformung des Kupplungstopfs erforderlich sind.

In einer bevorzugten Ausführungsform sind zwei Kupplungseinrichtungen vorgesehen, wobei die Anpressplatten beider Kupplungseinrichtungen gegen unterschiedliche axiale Seiten der selben Gegenplatte anpressbar sind oder gegen unterschiedliche Gegenplatten anpressbar sind. Die Reibungskupplung kann dadurch als Doppelkupplung ausgestaltet sein. Die jeweiligen Anpressplatten und Gegenplatten sind insbesondere als separate funktionell getrennte Bauteile ausgestaltet, so dass für die Doppelkupplung ein sogenanntes "Vier-Platten-Design" möglich ist, ohne den Bauraum signifikant zu erhöhen. Es ist auch möglich.genau eine Gegenplatte für beide Kupplungseinrichtungen vorzusehen, so dass sich für die Doppelkupplung ein sogenanntes "Drei-Platten-Design" ergibt.

Insbesondere weist die Gegenplatte einen im Wesentlichen ringförmigen Grundkörper mit mindestens zwei, vorzugsweise mindestes drei, vom Grundkörper radial nach außen abstehenden Befestigungsansätzen zum Einpressen in den Kupplungstopf auf, wobei die Befestigungsansätze jeweils eine in Umfangsrichtung verlaufende nach radial außen gerichtete Anpressfläche aufweisen und in dem jeweiligen Befestigungsansatz mindestens eine in radialer Richtung durch die Anpressfläche hindurch verlaufende Verbindungsöffnung ausgebildet ist. Dadurch, dass die Gegenplatte über die Anpressfläche der Befestigungsansätze in den Kupplungstopf sicher eingepresst werden kann, wird eine Relativbewegung zwischen der Gegenplatte und dem radial ausgerichteten Verbindungsmittel vermieden, da auch bei einem Aufweiten des Kupplungstopfs unter Fliehkrafteinwirkung oder Axiallast ein Spiel zwischen der Gegenplatte und dem Kupplungstopf vermieden wird. Dadurch kann vermieden werden, dass das Verbindungsmittel beim Betrieb der Reibungskupplung abgeschert wird.

Vorzugsweise ist eine Presspassung zwischen der Gegenplatte mit dem Kupplungstopf derart gewählt, dass bei einer Rotation der Gegenplatte und des Kupplungstopfs um eine gemeinsame Mittelachse mit maximaler Motordrehzahl eine Presspassung trotz der dabei auftretenden Fliehkrafteinflüsse verbleibt. Bei einer derartig gewählten Presspassung zwischen der Gegenplatte und dem Kupplungstopf wird auch ein bei hohen Drehgeschwindigkeiten eines Kraftfahrzeugmotors ein ausreichender Presssitz zwischen der Gegenplatte und dem Kupplungstopf gewährleistet, ohne dass ein Aufweiten des Kupplungstopfs unter Fliehkrafteinwirkung einen sicheren Sitz der Gegenplatte in dem Kupplungstopf beeinträchtigen kann. Die auf das Verbindungsmittel wirkenden Querkräfte können dadurch deutlich reduziert werden, so dass mit einer geringen Anzahl an radial ausgerichteten Verbindungsmitteln eine sichere und drehfeste Verbindung der jeweiligen Gegenplatte mit dem Kupplungstopf erreicht werden kann.

In einer bevorzugten Ausführungsform ist die Reibungskupplung als Doppelkupplung mit einer ersten Gegenplatte und einer separaten zweiten Gegenplatte ausgestaltet, wobei die erste Gegenplatte und die zweite Gegenplatte jeweils über mindestens zwei, vorzugsweise mindestens drei, von einem im Wesentlichen ringförmigen Grundkörper radial nach außen abstehende Befestigungsansätze in den Kupplungstopf eingepresst sind, wobei die Befestigungsansätze der ersten Gegenplatte relativ zu den Befestigungsansätzen der zweiten Gegenplatte derart in Umfangsrichtung versetzt sind, dass unter Berücksichtigung einer Verformung des Kupplungstopfes durch die eingepresste zweite Gegenplatte die Verbindung der ersten Gegenplatte mit dem Kupplungstopf an einer Stelle in Umfangsrichtung erfolgt, die vordem Einpressen der ersten Gegenplatte im Wesentlichen dem Nenndurchmesser des Kupplungstopfes vor dem Einpressen der zweiten Gegenplatte entspricht. Hierbei wird berücksichtigt, dass durch das Einpressen der zweiten Gegenplatte der Kupplungstopf etwas verformt wird. Der Kupplungstopf kann im Bereich der Befestigungsansätze etwas über seinen ursprünglichen Nenndurchmesser hinaus geweitet sein und im Bereich zwischen zwei in Umfangsrichtung benachbarten Befestigungsansätzen in einem Teilbereich unterhalb des ursprünglichen Nenndurchmessers verformt sein. Die Befestigungsansätze der ersten Gegenplatte sind nach dem Einpressen der zweiten Gegenplatte derart ausgerichtet, dass die Befestigungsansätze nicht im Bereich des über den Nenndurchmessers gedehnten Kupplungstopfes oder in Bereichen unterhalb des Nenndurchmessers verformten Kupplungstopfes angeordnet sind, sondern im Wesentlichen in einem Übergangsbereich, wo der Durchmesser des verformten Kupplungstopfes im Wesentlichen dem ursprünglichen Nenndurchmessern des Kupplungstopfes entspricht. Die erste Gegenplatte und die zweite Gegenplatte sind somit nicht exakt gleich ausgerichtet hintereinander in den Kupplungstopf eingepresst. Ferner sind die Befestigungsansätze der ersten Gegenplatte in Umfangsrichtung nicht exakt mittig zu den Befestigungsansätzen der zweiten Gegenplatte ausgerichtet, um aufgrund des unter den Nenndurchmesser verformten Kupplungstopfes in diesem Bereich das Einpressen der ersten Gegenplatte nicht zu erschweren oder sogar unmöglich zu machen. Stattdessen können die Befestigungsansätze der ersten Gegenplatte an einer Stelle positioniert werden, die einer Versetzung in Umfangsrichtung zu den Befestigungsansätzen der zweiten Gegenplatte um ca. 1/4 bis 1/3 der Strecke in Umfangsrichtung zwischen zwei benachbarten Befestigungsansätzen der zweiten Gegenplatte entspricht.

Besonders bevorzugt ist eine Betätigungseinrichtung mit einem ersten Kolben zur axialen Bewegung der ersten Anpressplatte mit Hilfe eines ersten Betätigungstopfes und einem zweiten Kolben zur axialen Bewegung der zweiten Anpressplatte mit Hilfe eines zweiten Betätigungstopfes vorgesehen, wobei der Betätigungsweg des ersten Kolbens im Wesentlichen dem Verschiebeweg der ersten Anpressplatte entspricht und/oder den Betätigungsweg des zweiten Kolbens im Wesentlichen dem Verschiebeweg der zweiten Anpressplatte entspricht. Dadurch wird eine direkt betätigte übersetzungsfreie Kupplung ausgebildet. Ein Verschwenken des jeweiligen Betätigungstopfes findet nicht statt, so dass die entsprechenden Bauteile zum Ermöglichen eines Verschwenkens des jeweiligen Betätigungstopfs eingespart werden können. Unter der Annahme eines ideell starren Betätigungstopfs entspricht der Betätigungsweg des jeweiligen Kolbens genau dem Verschiebeweg der zugehörigen Anpressplatte. Der Verschiebeweg der jeweiligen Anpressplatte unterscheidet sich von dem Betätigungsweg des zugehörigen Kolbens somit lediglich, um die Wegestrecke in axialer Richtung, um die der zugehörige Betätigungstopf beim Betätigen der jeweiligen Kupplung elastisch gebogen wird. Durch die bauraumsparende Anordnung des Verbindungsmittels können die Reibflächen der jeweiligen Gegenplatte, Anpressplatte und Kupplung nach radial außen verlängert werden, so dass mit einer geringeren Anpresskraft die beabsichtigten Momente übertragen werden können und eine Übersetzung zwischen der Bewegung des jeweiligen Kolbens und der Bewegung der jeweiligen Anpressplatte nicht erforderlich ist. Die als Doppelkupplung ausgestaltete Reibungskupplung kann dadurch deutlich einfacher aufgebaut sein.

Die Erfindung betrifft ferner einen Getriebestrang für ein Kraftfahrzeug mit einer motorseitigen Eingangswelle, mindestens einer getriebeseitigen Ausgangswelle und einer Reibungskupplung zum Kuppeln der Eingangswelle mit der Ausgangswelle, wobei die Reibungskupplung, wie vorstehend beschrieben aus- und weitergebildet sein kann. Durch die radial verlaufende Verbindungsöffnung kann sichergestellt werden, dass das Verbindungsmittel nicht axial, sondern radial ausgerichtet mit der Gegenplatte durch plastische Verformung verpresst wird. Dadurch ist es möglich, den anderenfalls in axialer Richtung vorzusehenden Bauraum einzusparen, so dass eine bauraumsparende Ausgestaltung ermöglicht ist und ein großes Drehmoment übertragen werden kann. Ferner sind geringere Genauigkeitsanforderungen möglich, so dass der Getriebestrang kostengünstiger hergestellt werden kann. Der Getriebestrang kann insbesondere mindestens einen direkt oder indirekt mit der Reibungskupplung verbundenen Schwingungsdämpfer, insbesondere Zweimassenschwungrad und/oder Fliehkraftpendel und/oder Massependel, aufweisen, wobei der Schwingungsdämpfer in Kraftflussrichtung vor oder nach der Reibungskupplung angeordnet sein kann.

In einer alternativen Ausführungsform ist eine Reibungskupplung, insbesondere Doppelkupplung, zum Kuppeln einer motorseitigen Eingangswelle mit mindestens einer getriebeseitigen Ausgangswelle vorgesehen, die eine Gegenplatte zur reibschlüssigen Übertragung eines Drehmoments und eine Kupplungseinrichtung aufweist, die eine relativ zu der Gegenplatten axial bewegbare Anpressplatte zum Kuppeln einer mit der Ausgangswelle verbindbaren Kupplungsscheibe aufweist. Zusätzlich ist ein Kupplungstopf zur Aufnahme der Kupplungseinrichtung vorgesehen, wobei die Gegenplatte in den Kupplungstopf eingesetzt, insbesondere eingepresst, ist. Die Gegenplatte ist über eine im Wesentlichen in Umfangsrichtung vorzugsweise vollständig umlaufend ausgeführte stoffschlüssige Verbindung mit dem Kupplungstopf verbunden. Die Verbindung der Gegenplatte mit dem Kupplungstopf kann dadurch als Schweißverbindung, Hartlotverbindung oder Lötverbindung erfolgen. Insbesondere erfolgt zusätzlich zu einer gegebenenfalls vorgesehenen reibschlüssigen Verbindung der Gegenplatte mit dem Kupplungstopf durch eine zwischen der Gegenplatte und dem Kupplungstopf vorgesehenen Presspassung der Kraftfluss zwischen der Gegenplatte und dem Kupplungstopf ausschließlich über die stoffschlüssige Verbindung. Die stoffschlüssige Verbindung kann beispielsweise mit Hilfe eines Schweißautomaten kostengünstig auch bei geringen Genauigkeitsanforderungen hergestellt werden.

Nachfolgend wird die Erfindung unter Bezugnahme auf die anliegenden Zeichnungen anhand bevorzugter Ausführungsformen exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Schnittansicht einer Reibungskupplung,
Fig. 2: eine schematische perspektivische Ansicht eines für die in Fig. 1 dargestellte Reibungskupplung verwendeten Verbindungsmittels,
Fig. 3: eine Schnittansicht einer Reibungskupplung in einer zweiten Ausführungsform und
Fig. 4: eine Schnittansicht einer Reibungskupplung in einer dritten Ausführungsform.

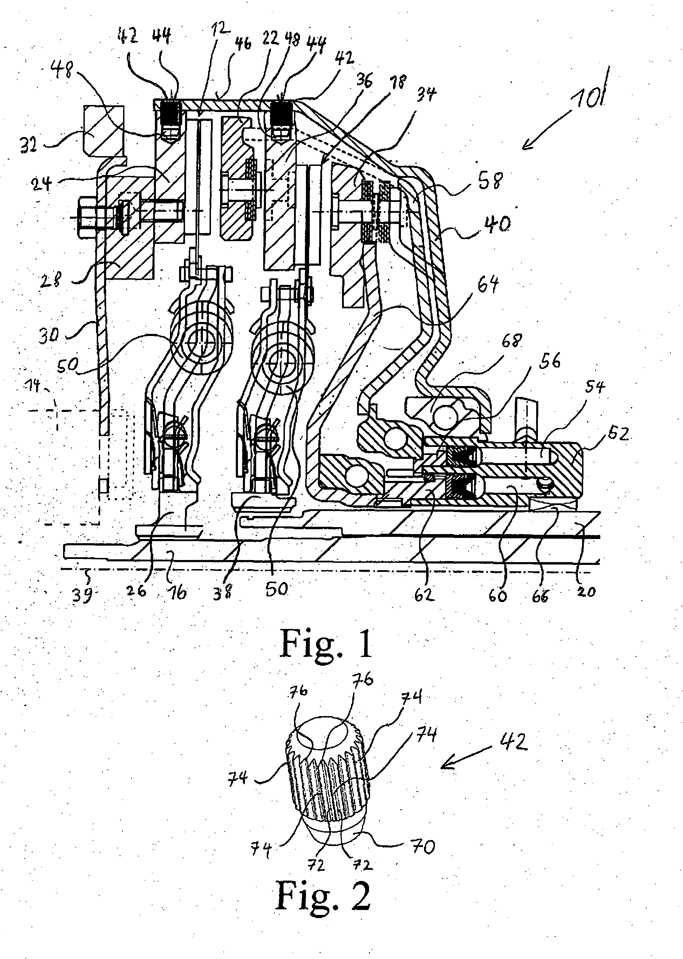

Die in Fig. 1 dargestellte als Doppelkupplung ausgestaltete Reibungskupplung 10 verbindet über eine erste Kupplungseinrichtung 12 (K1) eine motorseitige Eingangswelle 14 mit einer ersten Ausgangswelle 16. Ferner kann über eine zweite Kupplungseinrichtung 18 (K2) die Eingangswelle 14 mit einer zweiten Ausgangswelle 20 gekuppelt werden, die koaxial zur ersten Ausgangswelle 16 angeordnet ist. Die erste Kupplungseinrichtung 12 weist eine erste Anpressplatte 22 auf, die zu einer ersten Gegenplatte 24 axial beweglich ist, um zwischen der ersten Anpressplatte 22 und der ersten Gegenplatte 24 eine erste Kupplungsscheibe 26 reibschlüssig zu kuppeln. Die erste Gegenplatte 24 ist über eine Schwungmasse 28, die wiederum mit einer flexiblen Platte 30 verbunden ist, mit der Eingangswelle 14 verbunden. Mit der flexiblen Platte 30 ist ferner ein Starterkranz 32 verbunden. Die zweite Kupplungseinrichtung 18 weist eine zweite Anpressplatte 34 auf, die zu einer zweiten Gegenplatte 36 axial verschiebbar ist, um zwischen der ersten Anpressplatte 34 und der zweiten Gegenplatte 36 eine zweite Kupplungsscheibe 38 reibschlüssig zu kuppeln. Die Anpressplatten 22, 34, die Gegenplatten 24, 36 und die Kupplungsscheiben 26, 38 können um eine gemeinsame Mittelachse 39 rotieren.

Die erste Kupplungseinrichtung 12 und die zweite Kupplungseinrichtung 18 sind jeweils in einem Kupplungstopf 40 aufgenommen. Die erste Gegenplatte 24 und die zweite Gegenplatte 36 sind jeweils über ein als Rändelniet ausgestaltetes Verbindungsmittel 42 mit dem Kupplungstopf 40 verbunden. Die Verbindungsmittel 42 sind in radialer Richtung ausgerichtet und soweit in den Kupplungstopf 40 versenkt, dass eine nach radial außen weisende Stirnseite 44 des als Rändelniet ausgestalteten Verbindungsmittels 42 radial innerhalb zu einer nach radial außen weisenden Mantelfläche 46 des Kupplungstopfs 40 angeordnet ist. Zur Aufnahme des Verbindungsmittels 42 weist die jeweilige Gegenplatte 24, 36 eine Verbindungsöffnung 48 auf. In der dargestellten Ausführungsform ist das Verbindungsmittel 42 durch eine plastische Verformung sowohl in der Verbindungsöffnung 48 als auch mit dem Kupplungstopf 40 verpresst.

Durch die radiale Verbindung der in den Kupplungstopf 40 eingepressten Gegenplatten 24, 36 mit Hilfe der Verbindungsmittel 42 kann Bauraum eingespart werden, der durch eine nach radial außen erweitere Erstreckung der Gegenplatten 24, 36, der Anpressplatten 22, 34 und Kupplungsscheiben 26, 38 genutzt werden kann. Dadurch wird radial innen genügend Bauraum geschaffen, um die jeweiligen Kupplungsscheiben 26, 38 mit einem Kupplungsscheibendämpfer 50 zu versehen.

Ferner reichen die Reibflächen der ersten Kupplungseinrichtung 12 und der zweiten Kupplungseinrichtung 18 aus, um die Kupplungseinrichtungen 12, 18 direkt mit einer Betätigungseinrichtung 52 betätigen zu können. Die Betätigungseinrichtung 52 weist einen ersten Druckzylinder 54 auf, mit dessen Hilfe ein erster Kolben 56 ausgerückt werden kann. Durch den ersten Kolben 56 wird ein erster Betätigungstopf 58 axial verschoben, um die erste Anpressplatte 22 auf die erste Gegenplatte 24 zu zu bewegen und die erste Kupplungseinrichtung 12 zu schließen. Entsprechend weist die Betätigungseinrichtung 52 einen zweiten Druckzylinder 60 auf, mit dessen Hilfe ein zweiter Kolben 62 ausgerückt werden kann, um einen zweiten Betätigungstopf 64 axial zu verschieben. Durch den zweiten Betätigungstopf 64 wird die zweite Anpressplatte 34 auf die erste Gegenplatte 36 zu bewegt, um die zweite Kupplungseinrichtung 18 zu schließen. Die Betätigungseinrichtung 52 ist über ein Lager 66 an der koaxial äußeren zweiten Ausgangswelle 20 radial abgestützt. Der Kupplungstopf 40 ist über ein Deckellager 68 an der Betätigungseinrichtung 52 abgestützt.

Das in Fig. 2 dargestellte als Rändelniet ausgestaltete Verbindungsmittel 42 weist eine im eingepressten Zustand nach radial innen weisende Fase 70 auf, um das Einpressen des Verbindungsmittels in die Verbindungsöffnung 48 zu erleichtern. Im dargestellten Ausführungsbeispiel weist das Verbindungsmittel 42 eine Vielzahl von achsparallel verlaufenden Vertiefungen 72 auf, zwischen denen Erhebungen 74 ausgebildet sind, die beim Einpressen des Verbindungsmittel 42 in die Verbindungsöffnung 44 plastisch verformt werden können. Die Vertiefungen weisen jeweils eine gerundete Talsohle 76 auf, um Kerbwirkungseffekte zu reduzieren.

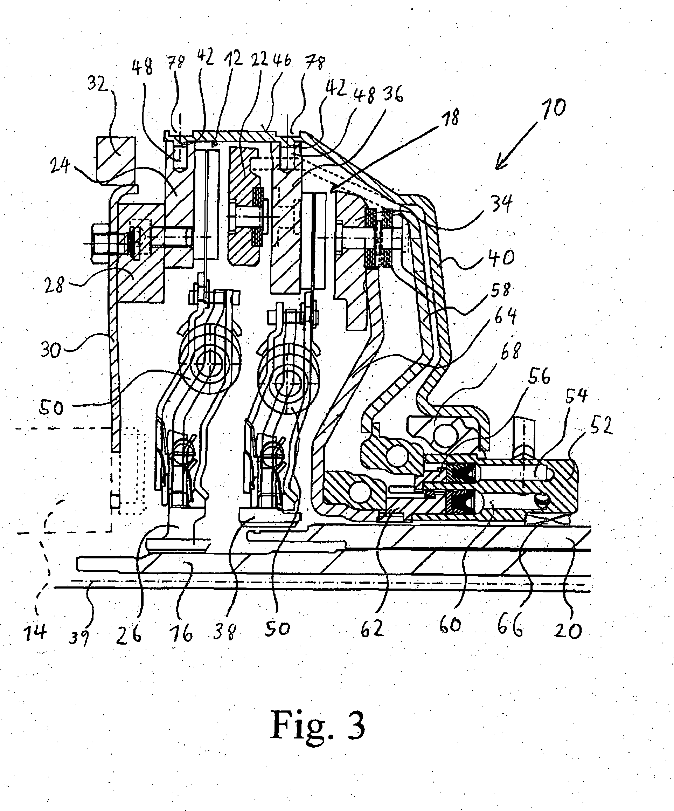

Bei der in Fig. 3 dargestellten Ausführungsform der Reibungskupplung 10 ist das Verbindungsmittel 42 durch eine plastische Verformung des Kupplungstopfs 40 in die Verbindungsöffnung 48 hinein ausgebildet. Das Verbindungsmittel 42 ist einstückig mit dem Kupplungstopf 40 ausgeführt. Hierzu wurde mit einem Stempel, dessen Querschnittsfläche größer als die Querschnittsfläche der Verbindungsöffnung 48 ist, eine Einpressvertiefung 78 in den Kupplungstopf 40 eingeformt, um Material des Kupplungstopfs 40 in die Verbindungsöffnung 48 hinein plastisch zu verformen, wodurch sich innerhalb der Verbindungsöffnung 48 zwischen der Verbindungsöffnung 48 und dem durch den Kupplungstopf 40 ausgebildeten Verbindungsmittel 42 ein Presssitz ergibt. Da der verwendete Stempel für die Einpressvertiefung 78 deutlich größer als die Verbindungsöffnung 48 ausgeführt ist, kann ein axialer Versatz der jeweiligen Gegenplatte 24, 36 in dem Kupplungstopf 40 bei der Herstellung der Verbindung mit Hilfe des Verbindungsmittels 42 automatisch berücksichtigt werden:

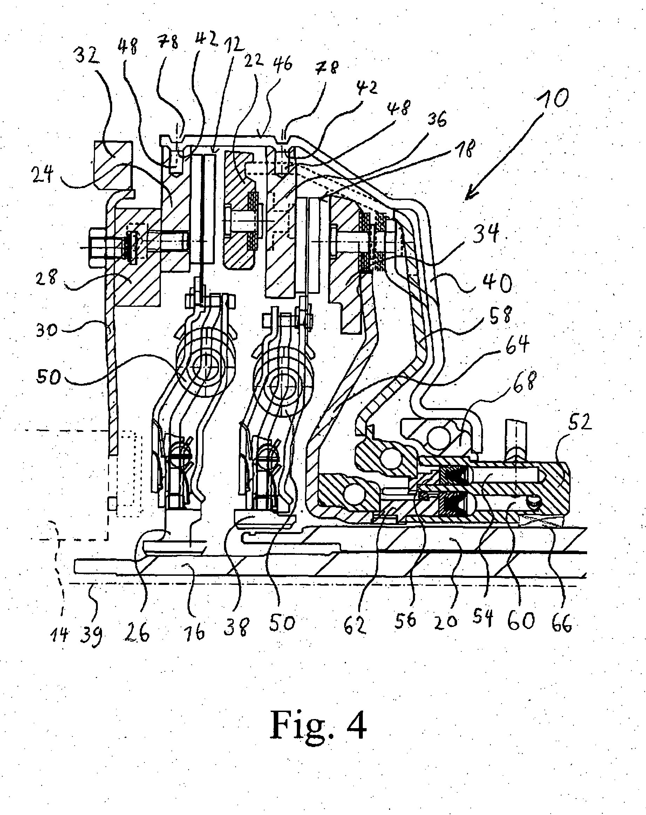

Bei der in Fig. 4 dargestellten Ausführungsform der Reibungskupplung 10 wurde im Vergleich zu der in Fig. 3 dargestellten Ausführungsform der Reibungskupplung 10 für die Einpressvertiefung 78 ein Stempel mit einer im Längsschnitt kegelstumpfförmigen Spitze verwendet, so dass die Einpressvertiefung 78 an der zur Verbindungsöffnung 48 weisenden Seite sogar eine kleinere Querschnittsfläche als die Querschnittsfläche der Verbindungsöffnung 48 aufweisen kann. Im dargestellten Ausführungsbeispiel ist die Verbindungsöffnung 48 an dem nach radial außen weisenden Ende kegelstumpfförmig angesenkt, so dass das plastisch verformte Material des Kupplungstopfs 40 leichter zur Ausbildung des Verbindungsmittels 42 in die Verbindungsöffnung 48 hineingeleitet werden kann.

### Bezugszeichenliste

- 10: Reibungskupplung
- 12: erste Kupplungseinrichtung
- 14: Eingangswelle
- 16: erste Ausgangswelle
- 18: zweite Kupplungseinrichtung
- 20: zweite Ausgangswelle
- 22: erste Anpressplatte
- 24: erste Gegenplatte
- 26: erste Kupplungsscheibe
- 28: Schwungmasse
- 30: flexible Platte
- 32: Starterkranz
- 34: zweite Anpressplatte
- 36: zweite Gegenplatte
- 38: zweite Kupplungsscheibe
- 39: Mittelachse
- 40: Kupplungstopf
- 42: Verbindungsmittel
- 44: Stirnseite
- 46: Mantelfläche
- 48: Verbindungsöffnung
- 50: Kupplungsscheibendämpfer
- 52: Betätigungseinrichtung
- 54: erster Druckzylinder
- 56: erster Kolben
- 58: erster Betätigungstopf
- 60: zweiter Druckzylinder
- 62: zweiter Kolben
- 64: zweiter Betätigungstopf
- 66: Lager
- 68: Deckellager
- 70: Fase
- 72: Vertiefung
- 74: Erhebung
- 76: Talsohle
- 78: Einpressvertiefung

## Patentansprüche

1. Reibungskupplung, zum Kuppeln einer motorseitigen Eingangswelle (14) mit mindestens einer getriebeseitigen Ausgangswelle (16, 20), mit
einer Gegenplatte (24, 36) zur reibschlüssigen Übertragung eines Drehmoments,
einer Kupplungseinrichtung (12, 18), die eine relativ zu der Gegenplatte axial bewegbare Anpressplatte (22, 34) zum Kuppeln einer mit der Ausgangswelle (16, 20) verbindbaren Kupplungsscheibe (26, 38) aufweist,
einem Kupplungstopf (40) zur Aufnahme der Kupplungseinrichtung (12, 18), wobei die Gegenplatte (24,36) in den Kupplungstopf (40) eingesetzt ist,
wobei die Gegenplatte (24, 36) über ein im Wesentlichen radial verlaufendes Verbindungsmittel (42) mit dem Kupplungstopf (40) verbunden ist,
**dadurch gekennzeichnet, dass**
das Verbindungsmittel (42) ein konturierter Bolzen, insbesondere eine Rändelniet ist,
das Verbindungsmittel (42) durch eine plastische Verformung des konturierten Bolzen selbst in einer in der Gegenplatte (24, 36) ausgebildeten Verbindungsöffnung (48) eingepresst ist, wobei der konturierte Bolzen vor dem Einpressen eine Querschnittsfläche aufweist, die im Vergleich zur Querschnittsfläche der Verbindungsöffnung (48) über die Querschnittsfläche der Verbindungsöffnung (48) seitlich hinausgehende Erhebungen (74) aufweist, wobei die Erhebungen (74) im eingepressten Zustand plastisch verformt sindund dass zwischen den Erhebungen (74) des konturierten Bolzen Vertiefungen (72) zur Aufnahme des plastisch verformten Materials der Erhebungen (74) und/oder der zu verbindenden Bauteile der Reibungskupplung ausgebildet sind, wobei die Vertiefungen (72) eine nach radial innen weisende gerundete Talsohle (76) aufweisen, wobei die Talsohle (76) insbesondere durch Walzen, Rollen Fließpressen oder Sintern und/oder Prägen herstellbar ist.

2. Reibungskupplung, zum Kuppeln einer motorseitigen Eingangswelle (14) mit mindestens einer getriebeseitigen Ausgangswelle (16, 20), mit
einer Gegenplatte (24, 36) zur reibschlüssigen Übertragung eines Drehmoments,
einer Kupplungseinrichtung (12,18), die eine relativ zu der Gegenplatte axial bewegbare Anpressplatte (22, 34) zum Kuppeln einer mit der Ausgangswelle (16, 20) verbindbaren Kupplungsscheibe (26, 38) aufweist,
einem Kupplungstopf (40) zur Aufnahme der Kupplungseinrichtung (12, 18), wobei die Gegenplatte (24,36) in den Kupplungstopf (40) eingesetzt ist,
wobei die Gegenplatte (24, 36) über ein im Wesentlichen radial verlaufendes Verbindungsmittel (42) mit dem Kupplungstopf (40) verbunden ist,
das Verbindungsmittel (42) durch eine plastische Verformung der zu verbindenden Bauteile der Reibungskupplung in einer in der Gegenplatte (24, 36) ausgebildeten Verbindungsöffnung (48) eingepresst ist, wobei das Verbindungsmittel (42) durch eine plastische Verformung des Kupplungstopfs (40) ausgebildet ist und wobei
der Kupplungstopf (40) gegenüberliegend zur Verbindungsöffnung (48) eine nach radial außen weisende durch ein Presswerkzeug herstellbare plastisch verformte Einpressvertiefung (78) aufweist, **dadurch gekennzeichnet, dass** die Einpressvertiefung (78) an der von der Verbindungsöffnung (48) wegweisenden Seite eine größere Querschnittsfläche als die Querschnittsfläche der Verbindungsöffnung (48) aufweist.

3. Reibungskupplung nach Anspruch 2, **dadurch gekennzeichnet, dass** die Einpressvertiefung (78) an der zu der Verbindungsöffnung (48) weisenden Seite eine kleinere Querschnittsfläche als die Querschnittsfläche der Verbindungsöffnung (48) aufweist.

4. Reibungskupplung nach einem der Ansprüche 1 bis 3, **dadurch gekennzeichnet, dass** zwei Kupplungseinrichtungen (12, 18) vorgesehen sind, wobei die Anpressplatten (22, 34) beider Kupplungseinrichtungen (12, 18) gegen unterschiedliche axiale Seiten der selben Gegenplatte (24, 36) anpressbar sind oder gegen unterschiedliche Gegenplatten (24, 36) anpressbar sind.

5. Reibungskupplung nach einem der Ansprüche 1 bis 4, **dadurch gekennzeichnet, dass** die Gegenplatte (24, 36) einen im Wesentlichen ringförmigen Grundkörper mit mindestens zwei, vorzugsweise mindestes drei, vom Grundkörper radial nach außen abstehende Befestigungsansätze zum Einpressen in den Kupplungstopf (40) aufweist, wobei die Befestigungsansätze jeweils eine in Umfangsrichtung verlaufende nach radial außen gerichtete Anpressfläche aufweisen und in dem jeweiligen Befestigungsansatz mindestens eine in radialer Richtung durch die Anpressfläche hindurch verlaufende Verbindungsöffnung (48) ausgebildet ist.

## Claims

1. Friction clutch, for coupling an engine-side input shaft (14) to at least one transmission-side output shaft (16, 20), having
a counterplate (24, 36) for the frictionally locking transmission of a torque,
a clutch device (12, 18) which has a pressure plate (22, 34) which can be moved axially relative to the counterplate in order to couple a clutch plate (26, 38) which can be connected to the output shaft (16, 20),
a clutch pot (40) for accommodating the clutch device (12, 18), the counterplate (24, 36) being inserted into the clutch pot (40),
the counterplate (24, 36) being connected to the clutch pot (40) via a substantially radially running connecting means (42),
**characterized in that**
the connecting means (42) is a contoured bolt, in particular a knurled rivet,
the connecting means (42) is pressed into a connecting opening (48) which is configured in the counterplate (24, 36) by way of a plastic deformation of the contoured bolt itself, the contoured bolt having, before the pressing-in operation, a cross-sectional area which, in comparison with the cross-sectional area of the connecting opening (48), has elevations (74) which protrude laterally beyond the cross-sectional area of the connecting opening (48), the elevations (74) being deformed plastically in the pressed-in state, and **in that** depressions (72) for receiving the plastically deformed material of the elevations (74) and/or the components of the friction clutch which are to be connected are configured between the elevations (74) of the contoured bolt, the depressions (72) having a radially inwardly pointing rounded bottom (76), it being possible for the bottom (76) to be produced, in particular, by way of milling, rolling, extrusion or sintering and/or stamping.

2. Friction clutch, for coupling an engine-side input shaft (14) to at least one transmission-side output shaft (16, 20), having
a counterplate (24, 36) for the frictionally locking transmission of a torque,
a clutch device (12, 18) which has a pressure plate (22, 34) which can be moved axially relative to the counterplate in order to couple a clutch plate (26, 38) which can be connected to the output shaft (16, 20),
a clutch pot (40) for accommodating the clutch device (12, 18), the counterplate (24, 36) being inserted into the clutch pot (40),
the counterplate (24, 36) being connected to the clutch pot (40) via a substantially radially running connecting means (42),
the connecting means (42) being pressed into a connecting opening (48) which is configured in the counterplate (24, 36) by way of a plastic deformation of the components of the friction clutch which are to be connected, the connecting means (42) being configured by way of a plastic deformation of the clutch pot (40), and
the clutch pot (40) having, lying opposite the connecting opening (48), a radially outwardly pointing plastically deformed press-in depression (78) which can be produced by way of a pressing tool, **characterized in that** the press-in depression (78) has a greater cross-sectional area on the side which points away from the connecting opening (48) than the cross-sectional area of the connecting opening (48).

3. Friction clutch according to Claim 2, **characterized in that** the press-in depression (78) has a smaller cross-sectional area on the side which points towards the connecting opening (48) than the cross-sectional area of the connecting opening (48).

4. Friction clutch according to one of Claims 1 to 3, **characterized in that** two clutch devices (12, 18) are provided, it being possible for the pressure plates (22, 34) of both clutch devices (12, 18) to be pressed against different axial sides of the same counterplate (24, 36) or to be pressed against different counterplates (24, 36).

5. Friction clutch according to one of Claims 1 to 4, **characterized in that** the counterplate (24, 36) has a substantially annular main body with at least two, preferably at least three, fastening projections which protrude radially to the outside from the main body for pressing into the clutch pot (40), the fastening projections having in each case one radially outwardly directed pressing face which runs in the circumferential direction, and at least one connecting opening (48) which runs through the pressing face in the radial direction being configured in the respective fastening projection.

## Revendications

1. Embrayage à friction, pour accoupler un arbre d'entrée (14) côté moteur à au moins un arbre de sortie (16, 20) côté transmission, comprenant
un contre-plateau (24, 36) pour la transmission par friction d'un couple,
un dispositif d'embrayage (12, 18) qui comprend un plateau de pression (22, 34) mobile axialement par rapport au contre-plateau pour accoupler un disque d'embrayage (26, 38) pouvant être relié à l'arbre de sortie (16, 20),
un pot d'embrayage (40) pour recevoir le dispositif d'embrayage (12, 18), le contre-plateau (24, 36) étant inséré dans le pot d'embrayage (40),
le contre-plateau (24, 36) étant relié au pot d'embrayage (40) par le biais d'un moyen de liaison (42) s'étendant essentiellement radialement,
**caractérisé en ce que**
le moyen de liaison (42) est un boulon profilé, en particulier un rivet moleté,
le moyen de liaison (42) est pressé, par une déformation plastique du boulon profilé lui-même, dans une ouverture de liaison (48) réalisée dans le contre-plateau (24, 36), le boulon profilé présentant avant le pressage une surface en section transversale qui présente, par comparaison avec la surface en section transversale de l'ouverture de liaison (48), des rehaussements (74) s'étendant latéralement au-delà de la surface en section transversale de l'ouverture de liaison (48), les rehaussements (74) étant déformés plastiquement à l'état pressé et
**en ce que** des renfoncements (72) pour recevoir le matériau déformé plastiquement des rehaussements (74) et/ou des composants à relier de l'embrayage à friction sont réalisés entre les rehaussements (74) du boulon profilé, les renfoncements (72) présentant un creux (76) arrondi orienté radialement vers l'intérieur, le creux (76) pouvant être fabriqué en particulier par laminage, roulage, extrusion ou frittage et/ou estampage.

2. Embrayage à friction, pour accoupler un arbre d'entrée (14) côté moteur à au moins un arbre de sortie (16, 20) côté transmission, comprenant
un contre-plateau (24, 36) pour la transmission par friction d'un couple,
un dispositif d'embrayage (12, 18) qui comprend un plateau de pression (22, 34) mobile axialement par rapport au contre-plateau pour accoupler un disque d'embrayage (26, 38) pouvant être relié à l'arbre de sortie (16, 20),
un pot d'embrayage (40) pour recevoir le dispositif d'embrayage (12, 18), le contre-plateau (24, 36) étant inséré dans le pot d'embrayage (40),
le contre-plateau (24, 36) étant relié au pot d'embrayage (40) par le biais d'un moyen de liaison (42) s'étendant essentiellement radialement,
le moyen de liaison (42) étant pressé, par une déformation plastique des composants à relier de l'embrayage à friction, dans une ouverture de liaison (48) réalisée dans le contre-plateau (24, 36), le moyen de liaison (42) étant réalisé par une déformation plastique du pot d'embrayage (40) et
le pot d'embrayage (40) présentant de manière opposée à l'ouverture de liaison (48) un renfoncement de pressage (78) déformé plastiquement orienté radialement vers l'extérieur et pouvant être fabriqué au moyen d'un outil de pressage, **caractérisé en ce que** le renfoncement de pressage (78) présente sur le côté opposé à l'ouverture de liaison (48) une plus grande surface en section transversale que la surface en section transversale de l'ouverture de liaison (48).

3. Embrayage à friction selon la revendication 2, **caractérisé en ce que** le renfoncement de pressage (78) présente sur le côté tourné vers l'ouverture de liaison (48) une plus petite surface en section transversale que la surface en section transversale de l'ouverture de liaison (48).

4. Embrayage à friction selon l'une quelconque des revendications 1 à 3, **caractérisé en ce que** deux dispositifs d'embrayage (12, 18) sont prévus, les plateaux de pression (22, 34) des deux dispositifs d'embrayage (12, 18) pouvant être pressés contre des côtés axiaux différents du même contre-plateau (24, 36) ou pouvant être pressés contre des contre-plateaux différents (24, 36).

5. Embrayage à friction selon l'une quelconque des revendications 1 à 4, **caractérisé en ce que** le contre-plateau (24, 36) présente un corps de base essentiellement annulaire pourvu d'au moins deux, de préférence d'au moins trois, saillies de fixation faisant saillie radialement vers l'extérieur à partir du corps de base pour le pressage dans le pot d'embrayage (40), les saillies de fixation présentant respectivement une surface de pression s'étendant dans la direction périphérique et orientée radialement vers l'extérieur, et au moins une ouverture de liaison (48) s'étendant dans la direction radiale à travers la surface de pression étant réalisée dans la saillie de fixation respective.
